# FASCICULE DE BREVET EUROPEEN

(11) **EP 4 526 578 B1**
(45) Date de publication et mention de la délivrance du brevet: **02.09.2026**
(21) Numéro de dépôt: 23726922.0
(22) Date de dépôt: 10.05.2023
(51) Int. Cl.: F16H 19/06, F16H 25/20

(54) **VERIN A CABLES A BOUCLES ASYMETRIQUES**
KABELZYLINDER MIT ASYMMETRISCHER SCHLEIFE
ASYMMETRIC-LOOP CABLE CYLINDER

(30) Priorité: 18.05.2022 FR 2204755
(43) Date de publication de la demande: 26.03.2025
(73) Titulaire: Commissariat à l'Energie Atomique et aux Energies Alternatives, 75015 Paris (FR)
(72) Inventeur: GARREC Philippe, 91120 PALAISEAU (FR)
(74) Mandataire: Cabinet Boettcher
(86) Numéro de dépôt international: PCT/EP2023/062513
(87) Numéro de publication internationale: WO 2023/222489

(56) Documents cités:
- WO-A1-2019/029976
- FR-A1- 3 115 084
- US-A1- 2011 056 321
- US-A1- 2021 262 876

## Description

L'invention concerne les vérins à câbles.

### ARRIERE PLAN DE L'INVENTION

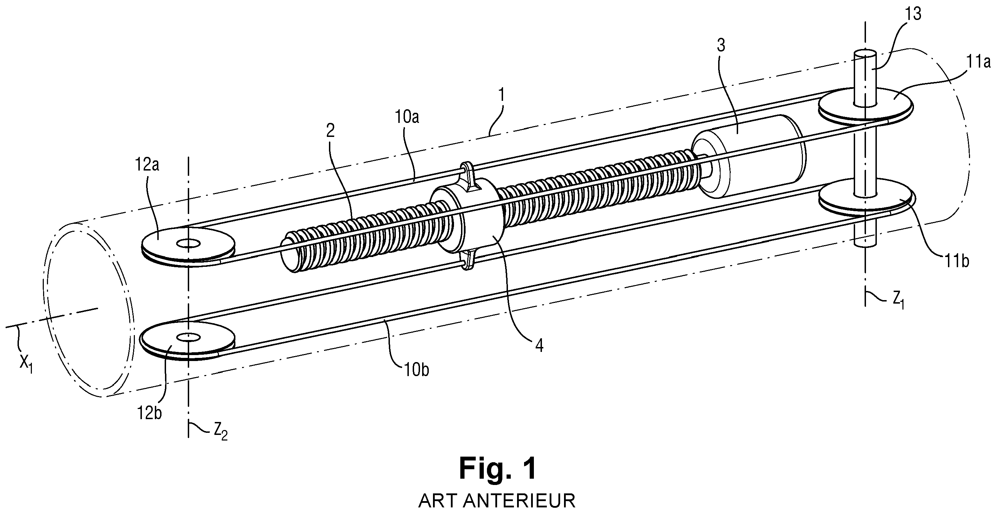

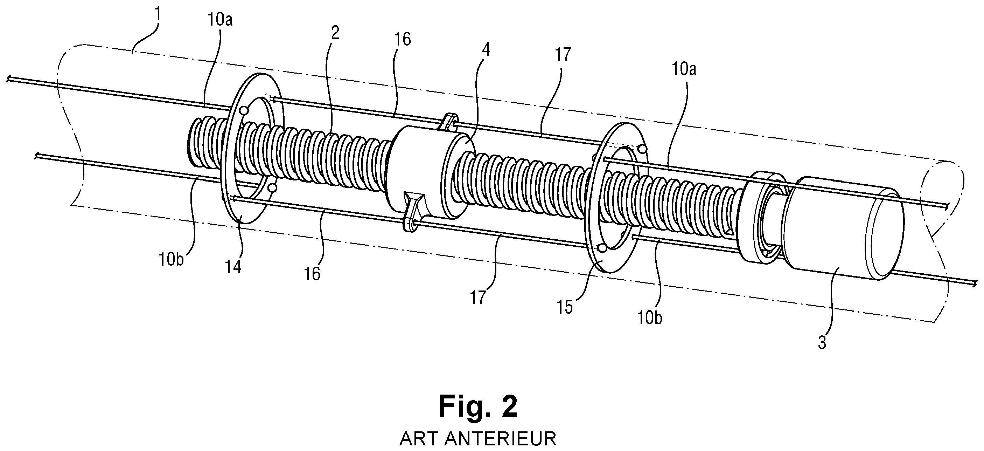

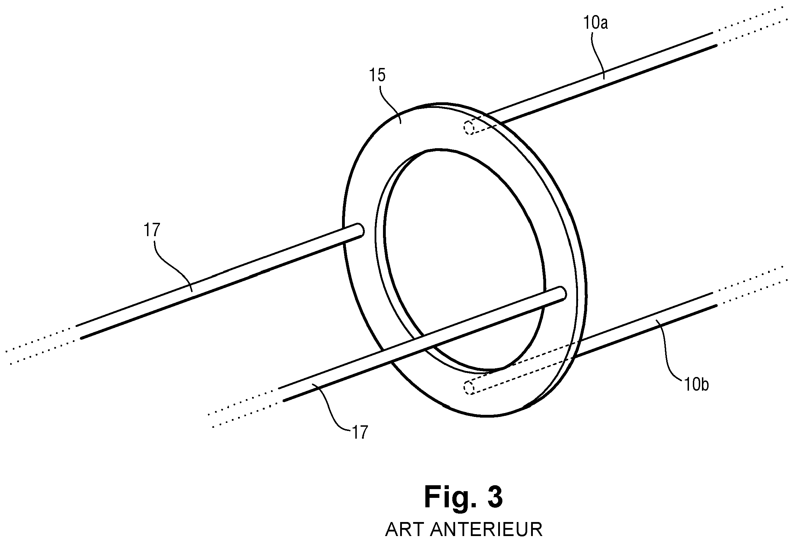

On connaît par exemple du document FR-A-3070062 un vérin à deux câbles de longueurs identiques. Comme illustré à la figure 1 qui est une vue en perspective schématique d'un vérin à câble selon l'art antérieur, ce dernier comporte un corps 1 dans lequel une vis 2 est montée à rotation autour d'un axe longitudinal de rotation X1, en étant sélectivement entraînée par un moteur 3. Un écrou 4 coopère avec la vis 2 pour se déplacer dans le corps 1 sous l'effet de la rotation de la vis. Le vérin comporte deux câbles 10a, 10b formant des boucles entre des poulies amont 11a, 11b et aval 12a,12b respectives, de façon à définir pour chaque câble des brins parallèles à l'axe de rotation X1 qui sont attelés à l'écrou 4 sur des points d'attelage respectifs diamétralement opposés. Les poulies amont 11a, 11b et aval 12a, 12b de chaque câble 10a,10b sont montées à rotation selon des axes de rotation respectifs Z1, Z2 parallèles entre eux et tous deux perpendiculaires à l'axe longitudinal de rotation X1. Pour la synchronisation des câbles 10a, 10b, au moins l'une des paires de poulies (ici les poulies amont 11a, 11b) comporte un arbre de synchronisation 13 pour solidariser les poulies en rotation. Les câbles 10a et 10b sont empêchés de glisser sur au moins l'une des poulies solidarisées en rotation, qui peut ainsi transmettre le mouvement et le couple à un segment ou accessoire. L'empêchement du glissement du câble sur la poulie peut être obtenu par exemple par ancrage du câble sur la poulie, ou encore au moyen d'un tour mort autour de celle-ci. Ces poulies seront dites proximales dans la mesure où elles sont articulées à proximité de l'écrou 4, ici en l'occurrence directement sur le corps 1. En variante illustrée à la figure 2, les câbles 10a, 10b ne sont pas directement attelés à l'écrou 4 mais indirectement par l'intermédiaire d'anneaux de couplage 14,15 disposés autour de la vis 2 de part et d'autre de l'écrou 4 auxquels les câbles 10a,10b sont attelés, les anneaux de couplage étant chacun attelés à l'écrou par deux tirants respectifs 16, 17. Comme cela est visible à la figure 3, les tirants 17 attelant l'anneau 15 à l'écrou 4 sont agencés de façon diamétralement opposée. Sur chaque anneau de couplage 14, 15 les points d'attelage des tirants et les points d'attelage des câbles sont ici disposés à 90 degrés l'un de l'autre (cette disposition n'est cependant pas nécessaire, et une autre disposition angulaire est possible). Ainsi, les anneaux de couplage 14, 15 se comportent comme des cardans adaptés à absorber des désalignements des câbles 10a, 10b, ou des mouvements non axiaux de l'écrou 4 lors de son déplacement axial.

Lorsque, comme illustré, la distance entre les poulies amont 11a ,11b et aval 12a, 12b d'un même câble 10a, 10b est suffisamment petite pour assurer une rigidité en flexion importante des brins des câbles 10a, 10b s'étendant entre les poulies et l'écrou 4, il est possible d'éviter l'utilisation d'un organe spécifique d'anti-rotation de l'écrou 4, la rigidité en flexion des brins des câbles 10a, 10b limitant la rotation de l'écrou 4 et remplissant la fonction d'anti-rotation. Cette disposition simplifie considérablement la conception de ce type de vérins. Ainsi, avec ou sans utilisation d'anneaux de couplage, l'utilisation de deux câbles permet une simplification considérable du guidage de l'écrou 4.

Ces vérins à câbles sont utilisés pour déplacer une charge attelée à l'un ou aux deux câbles, ou pour faire tourner un accessoire solidarisé à l'une des poulies. En particulier, ces vérins sont typiquement utilisés pour actionner des phalanges de doigts d'une main robotisée.

La question s'est alors posée d'utiliser l'un de ces vérins pour faire tourner un accessoire monté à rotation autour d'un axe distant du vérin. Il serait évidemment possible d'éloigner l'une des poulies aval pour la faire tourner autour de l'axe distant en allongeant le câble correspondant, la poulie aval ainsi éloignée faisant office de poulie distante solidaire de l'accessoire. Cependant, cet éloignement ferait s'effondrer la rigidité en flexion du câble ainsi allongé, compromettant ainsi l'anti-rotation de l'écrou du vérin au moyen des seuls câbles, et obligeant à la réintégration d'un organe d'anti-rotation spécifique.

L'art antérieur est encore illustré par le document FR 3 115 084 A1

### OBJET DE L'INVENTION

L'invention vise à proposer une disposition permettant l'utilisation d'un tel vérin pour provoquer la rotation d'accessoires dont l'axe de rotation est distant du vérin, tout en préservant l'anti-rotation de l'écrou du vérin assuré par les câbles.

### RESUME DE L'INVENTION

En vue de la réalisation de ce but, on propose un vérin comportant un corps dans lequel une vis est montée à rotation autour d'un axe longitudinal en étant sélectivement entraînée par un moteur, un écrou coopérant avec la vis pour se déplacer dans le corps sous l'effet de la rotation de la vis, le vérin comportant une paire de poulies aval et une paire de poulies amont disposées de part et d'autre de l'écrou, de sorte que dans au moins l'une des paires, les poulies sont solidaires en rotation, et deux câbles coopérant chacun avec l'une des poulies amont et l'une des poulies aval de façon à définir pour chaque câble des brins parallèles à l'axe de rotation de la vis qui sont attelés à l'écrou. Selon l'invention, l'un des câbles forme une boucle entre sa poulie amont et sa poulie aval, tandis que l'autre des câbles est prolongé au-delà de sa poulie aval pour coopérer avec une poulie distante montée à rotation selon un axe de rotation distant distinct de l'axe de rotation de la poulie aval, la poulie distante formant renvoi pour renvoyer le câble prolongé vers la poulie amont, le câble ainsi prolongé étant empêché de glisser sur celle de la poulie amont ou aval associée qui est solidarisée en rotation.

L'empêchement du glissement du câble prolongé sur la poulie solidarisée en rotation peut être obtenu par exemple par ancrage du câble sur la poulie, ou encore au moyen d'un tour mort autour de celle-ci. Par tour mort autour d'une poulie, on entend que le câble est enroulé autour de ladite poulie selon un secteur angulaire suffisant (typiquement au moins trois quart de tour) pour empêcher tout glissement du câble sur ladite poulie.

En particulier, si le câble prolongé est empêché de glisser sur sa poulie aval, le câble prolongé permet d'entraîner en rotation la poulie distante tout en préservant la rigidité en flexion de la portion de câble prolongé qui s'étend entre l'écrou et la poulie aval, préservant la fonction d'antirotation de l'écrou assurée par les deux câbles.

Le brin du câble prolongé s'étendant entre la poulie distante et la poulie amont peut atteindre directement la poulie amont, ou encore être guidé par une poulie auxiliaire, en faisant le cas échéant un tour mort autour de celle-ci. Dans ce cas, la poulie auxiliaire peut être montée à rotation autour du même axe de rotation que la poulie aval.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures des dessins annexés, parmi lesquelles :
[Fig. 1] la figure 1, déjà mentionnée, est une vue en perspective schématique d'un vérin à câbles selon l'art antérieur, le corps du vérin étant simplement esquissé pour en faire apparaître l'intérieur ;
[Fig. 2] la figure 2, déjà mentionnée, est une vue en perspective schématique partielle d'une variante d'un vérin à câbles de la figure 1, selon l'art antérieur ;
[Fig. 3] la figure 3, déjà mentionnée, est une vue en perspective schématique d'un des anneaux de couplage équipant le vérin à câble de la figure 2 ;
[Fig. 4] la figure 4 est une vue en perspective schématique d'un vérin à câbles selon un premier mode particulier de réalisation de l'invention, le corps de vérin ayant été omis pour plus de clarté ;
[Fig. 5] la figure 5 est une vue en perspective schématique d'un vérin à câbles selon une première variante de réalisation du vérin de la figure 4;
[Fig. 6] la figure 6 est une vue en perspective schématique d'un vérin à câbles selon une deuxième variante de réalisation du vérin de la figure 4;
[Fig. 7] la figure 7 est une vue en perspective schématique d'un vérin à câbles selon une troisième variante de réalisation du vérin de la figure 4;
[Fig. 8] la figure 8 est une vue en perspective schématique d'un vérin à câbles selon un deuxième mode particulier de réalisation de l'invention, le corps de vérin ayant été omis pour plus de clarté ;
[Fig. 9] la figure 9 est une vue en perspective schématique d'un vérin à câbles selon une première variante de réalisation du vérin de la figure 8;
[Fig. 10] la figure 10 est une vue en perspective schématique d'un vérin à câbles selon une deuxième variante de réalisation du vérin de la figure 8;
[Fig. 11] la figure 8 est une vue en perspective schématique d'un vérin à câbles selon un troisième mode particulier de réalisation de l'invention, le corps de vérin ayant été omis pour plus de clarté ;
[Fig. 12] la figure 12 est une vue en perspective schématique d'un doigt robotisé à deux phalanges utilisant deux vérins à câbles, dont un vérin à câbles selon l'invention.

### DESCRIPTION DETAILLEE DE L'INVENTION

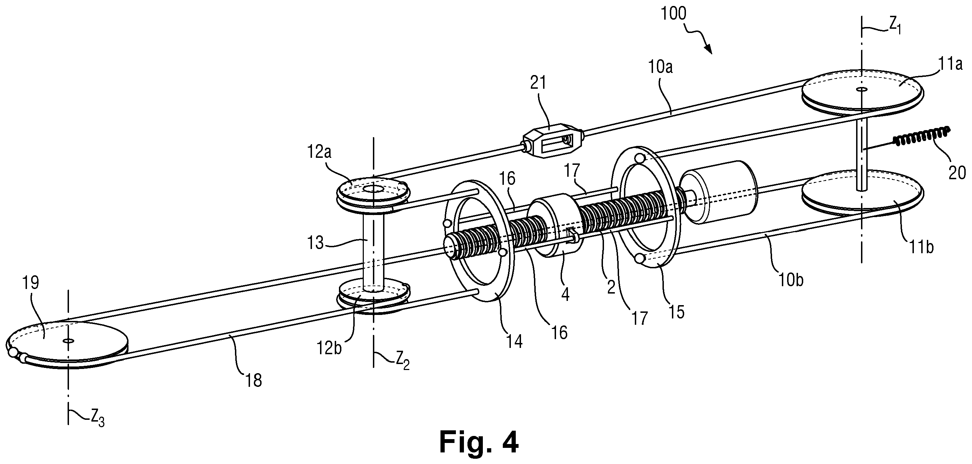

Les figures 4 et suivantes qui décrivent des modes particuliers de réalisation du vérin à câbles asymétriques selon l'invention ont été simplifiées. Sur toutes ces figures, on reconnaît, comme sur les vérins de l'art antérieur décrits aux figures 1 à 3, la vis 2, l'écrou 4, les anneaux de couplage 14, 15 attelés à l'écrou 4 par les tirants 16, 17 qui relient les anneaux de couplage 14, 15 l'un à l'autre et à l'écrou 4. On reconnait également les câbles 10a, 10b, et les paires de poulies amont 11a, 11b et aval 12a, 12b sur lesquelles les câbles forment des boucles.

Un premier mode particulier de réalisation de l'invention est illustré à la figure 4. Selon un aspect essentiel de l'invention, l'un des câbles, en l'occurrence le câble 10b, a été prolongé au-delà de la poulie aval 12b pour présenter un brin 18 s'étendant vers une poulie distante 19 d'axe de rotation Z3 distinct parallèle aux axes de rotation Z1, Z2, pour coopérer avec la poulie distante 19 et l'actionner en rotation. La poulie distante 19 forme un renvoi pour renvoyer le câble 10b vers sa poulie amont 11b. Pour la suite, on appellera le câble 10b le câble long ou câble prolongé, et on appellera l'autre câble 10a le câble court. Ainsi, le vérin à câbles de l'invention est asymétrique en ce que les deux câbles ont des longueurs distinctes.

Ici, les poulies aval 12a,12b, sont solidarisées en rotation par un arbre de synchronisation 13. Selon un aspect essentiel de l'invention, le câble long 10b est empêché de glisser sur la poulie aval 12b en lui faisant faire un tour mort autour de la poulie aval 12b avant de former le brin 18 s'étendant jusqu'à la poulie distante 19. Cette disposition permet de maintenir la portion de câble long 10b qui s'étend entre la poulie aval 12b et l'anneau 14 aussi tendue que possible, préservant ainsi la rigidité en flexion nécessaire à l'anti-rotation de l'écrou 4. La portion de câble 18 s'étendant entre la poulie aval 12b et la poulie distante 19 peut alors présenter une longueur appréciable, sans remettre en cause l'anti-rotation de l'écrou 4. Si toutefois cette longueur était excessive, on pourra employer une poulie auxiliaire pour guider cette portion de câble.

Pour préserver la rigidité en flexion qui dépend de la tension des câbles, les poulies amont 11a, 11b sont montées à pivotement sur un arbre de rotation commun qui dispose d'une petite liberté de mouvement parallèlement à l'axe de la vis 2, et un tendeur 20 a été disposé pour déplacer l'arbre de rotation commun des poulies amont 11a, 11b et ainsi provoquer un allongement initial des câbles suffisant pour maintenir la tension de repos nécessaire dans les portions des câbles 10a, 10b s'étendant entre les poulies amont 11a,11b et aval 12a, 12b et les anneaux de couplage 14, 15. Alternativement à cette solution un ridoir 21 placé ici sur le câble court 10a permet en allongeant ce câble de parvenir au même résultat.

On remarquera que le câble court 10a fait ici également un tour mort autour de la poulie aval 12a, ce qui l'empêche de glisser sur ses poulies 12a, 11a. On pourra plus généralement prévoir des tours morts des deux câbles sur leurs poulies amont ou aval solidarisées en rotation pour empêcher tout glissement des câbles sur lesdites poulies et ainsi synchroniser les deux câbles.

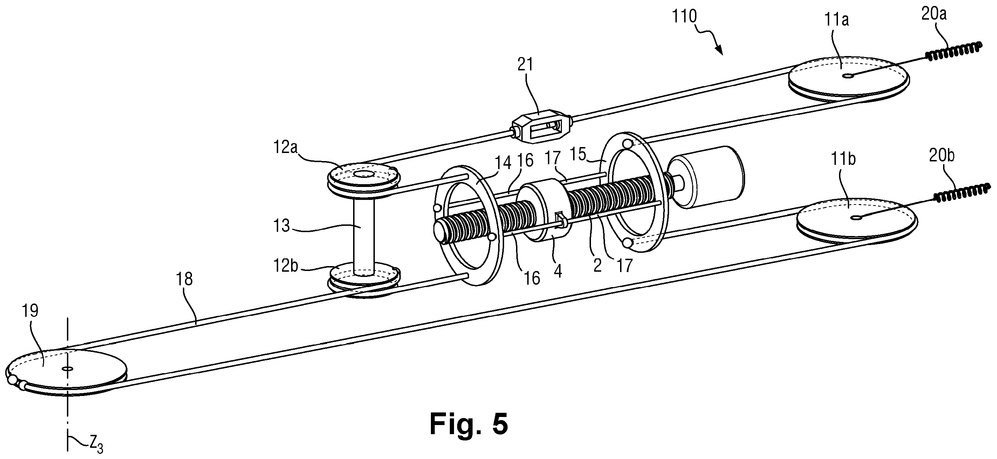

Selon la première variante illustrée à la figure 5, sur laquelle les éléments identiques portent des références identiques, le vérin à câbles 110 comporte des poulies amont 11a, 11b qui ne sont plus montées sur un arbre de rotation commun mais dont l'une d'entre elles est équipée d'un tendeur 20a ou 20b pour déplacer l'axe de rotation de l'une des poulies amont 11a ou11b parallèlement à l'axe de la vis 2, ce qui provoque un allongement initial suffisant pour maintenir la tension de repos nécessaire dans les portions des câbles 10a, 10b s'étendant entre les poulies amont 11a, 11b et aval 12a, 12b et les anneaux de couplage 14, 15. Alternativement à cette solution, un ridoir 21 placé ici sur le câble court 10a permet, en allongeant ce câble, de parvenir au même résultat. On remarquera que sur cette figure, l'axe de rotation de la poulie distante 19 et l'axe de rotation de la poulie amont 11b ont été décalés latéralement.

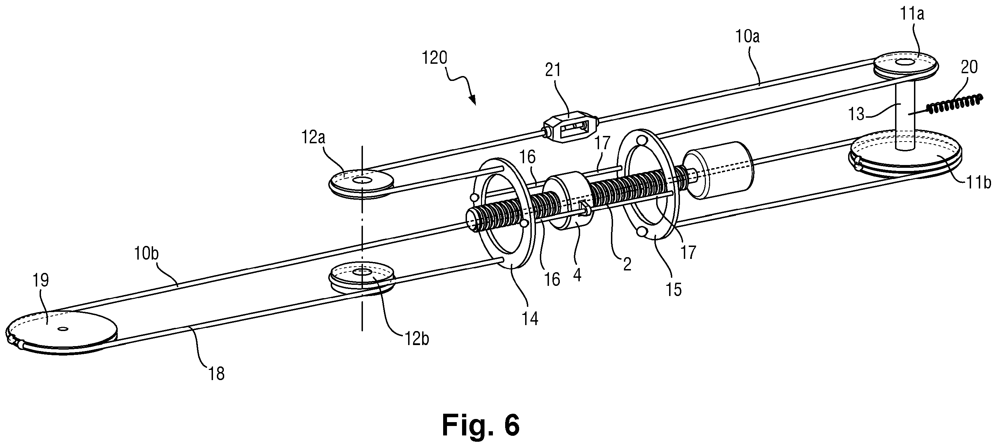

Selon la deuxième variante illustrée à la figure 6, le vérin à câbles 120 comporte un arbre de synchronisation 13 qui est maintenant disposé pour solidariser les poulies amont 11a, 11b, tandis que le tendeur 20 est disposé pour déplacer l'arbre de synchronisation 13 pour provoquer un allongement initial suffisant et maintenir la tension de repos nécessaire dans les câbles 10a, 10b (afin que le tendeur 20 n'entrave pas la rotation de l'arbre de synchronisation 13, le tendeur agira par exemple sur une douille montée pour pivoter autour de l'arbre de synchronisation 13). Alternativement à cette solution, un ridoir 21 placé ici sur le câble court 10a permet, en allongeant ce câble, de parvenir au même résultat.

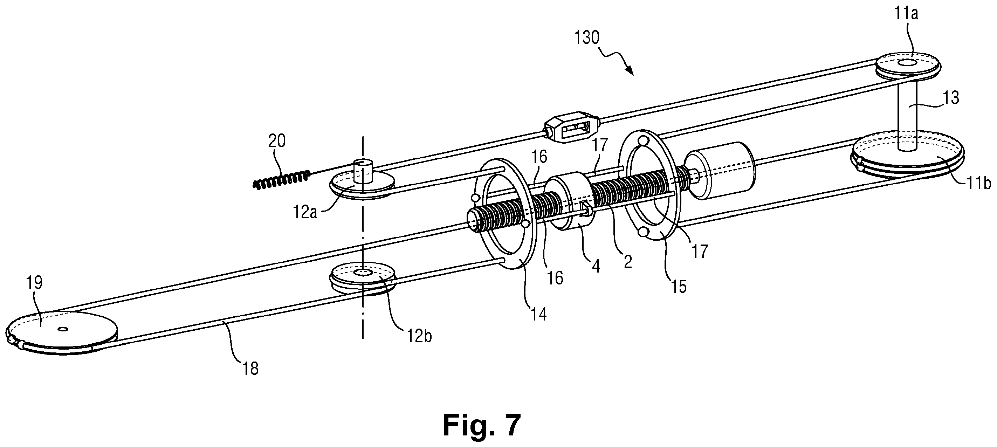

Selon la troisième variante illustrée à la figure 7, le vérin à câbles 130 comporte un arbre de synchronisation 13 qui est toujours disposé pour solidariser les poulies amont 11a,11b, tandis que le tendeur 20 est disposé pour tirer sur la poulie aval 12a du câble court 10a et provoquer un allongement initial suffisant pour maintenir la tension de repos nécessaire. Alternativement à cette solution, un ridoir 21 placé ici sur le câble court 10a permet, en allongeant ce câble, de parvenir au même résultat.

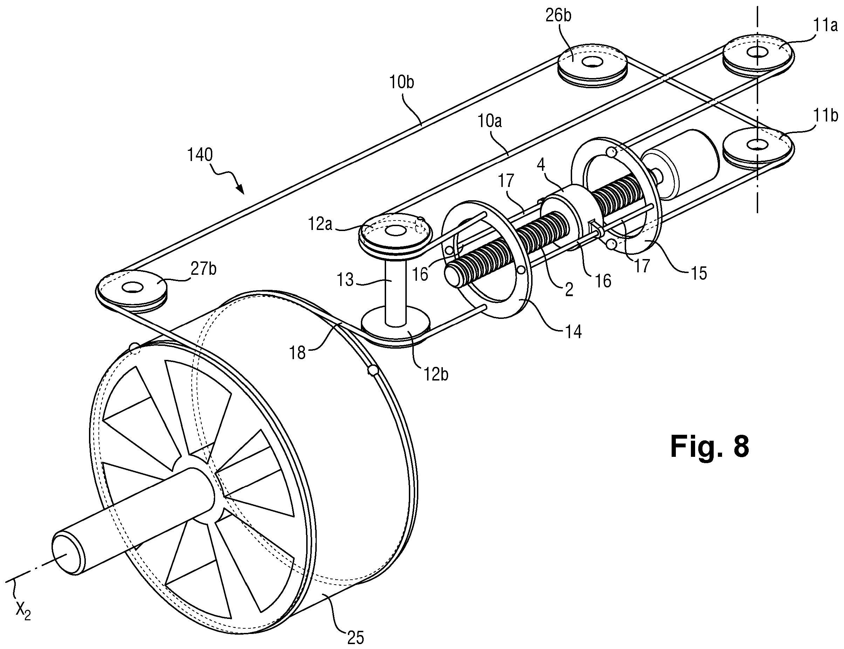

Dans le deuxième mode particulier de réalisation de l'invention illustré à la figure 8, le vérin à câbles 140 de l'invention est utilisé pour actionner une poulie distante 25 montée ici à rotation selon un axe de rotation X2 parallèle à l'axe de rotation X1 de la vis 2. Les mêmes éléments ayant toujours les mêmes références que dans les autres figures, il est visible sur la figure 8 que la poulie aval 12b sert, de renvoi d'angle pour le brin 18 qui prolonge le câble long 10b au-delà de la poulie aval 12b et qui vient s'enrouler sur la poulie distante 25. Quant à la poulie amont 11b, elle sert également de renvoi d'angle pour envoyer le câble long 10b vers la poulie 25 pour y être enroulé dans l'autre sens, en passant par deux poulies auxiliaires de renvoi 26b, 27b. Ici, les poulies aval 12a,12b sont solidarisées entre elles par l'arbre de synchronisation 13.

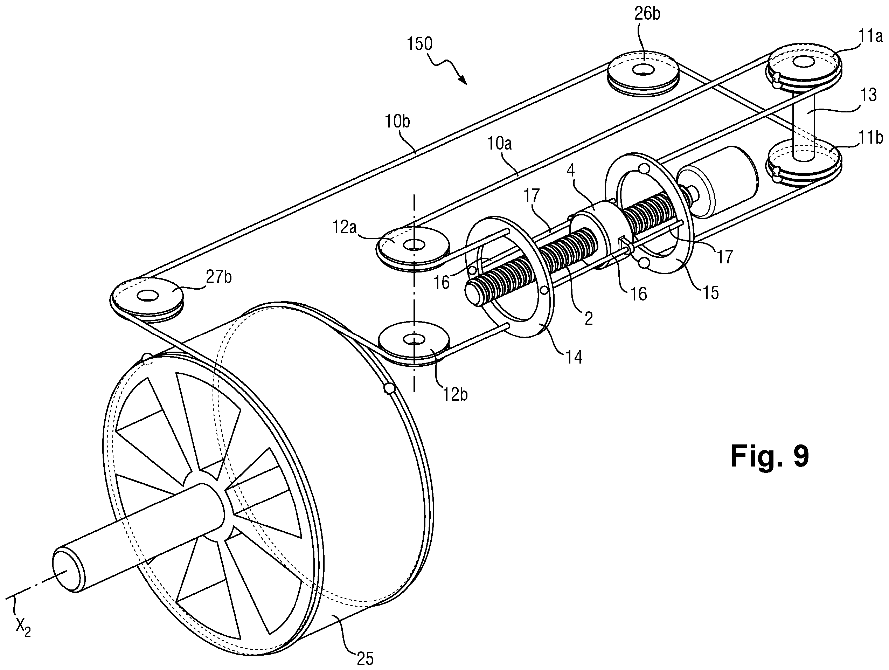

Dans la première variante de ce deuxième mode de réalisation, illustrée à la figure 9, le vérin à câbles 150 comporte des poulies amont 11a,11b qui sont solidarisées entre elles par l'arbre de synchronisation 13. Dans ces deux exemples de réalisation, on pourra placer le ou les tendeurs comme selon l'une des variantes du mode de réalisation illustré aux figures 4 à 7.

Dans les vérins des figures 8 et 9, on remarquera que le câble long 10b est ancré sur la poulie distante 25 qui se trouve à proximité de la poulie aval 12b. Sur la figure 8, la poulie aval 12b servant de renvoi à angle droit du câble long 10b, on empêche ainsi tout glissement du câble long 10b sur sa poulie aval 12b qui est solidarisée à l'autre poulie aval 12a, sans qu'il soit nécessaire de faire un tour mort du câble long 10b autour de sa poulie aval 12b. Sur la figure 9, le câble long 10b fait un tour mort autour de sa poulie amont 11b, qui est solidarisée en rotation avec l'autre poulie amont 11a.

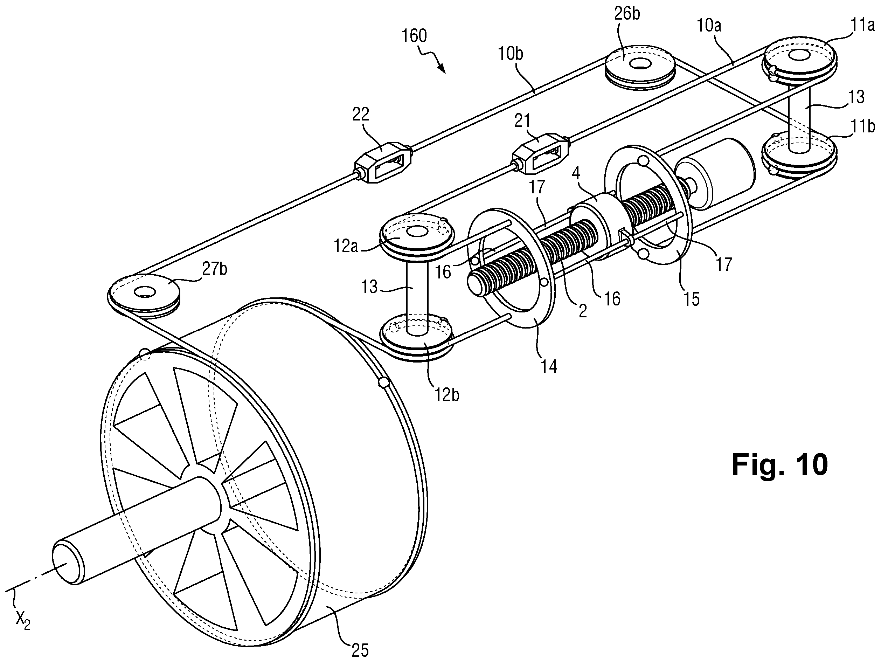

Selon la deuxième variante du deuxième mode de réalisation, illustrée à la figure 10, le vérin à câbles 160 comporte des poulies aval 12a, 12b qui sont solidarisées en rotation par un arbre de synchronisation 13, tandis que les poulies amont sont solidarisées en rotation par un arbre de synchronisation 23. Un ridoir 21 ou 22 est installé sur le câble 10a ou 10b qui en allongeant l'un de ces câbles provoque un allongement initial suffisant pour maintenir la tension de repos nécessaire dans l'ensemble des brins.

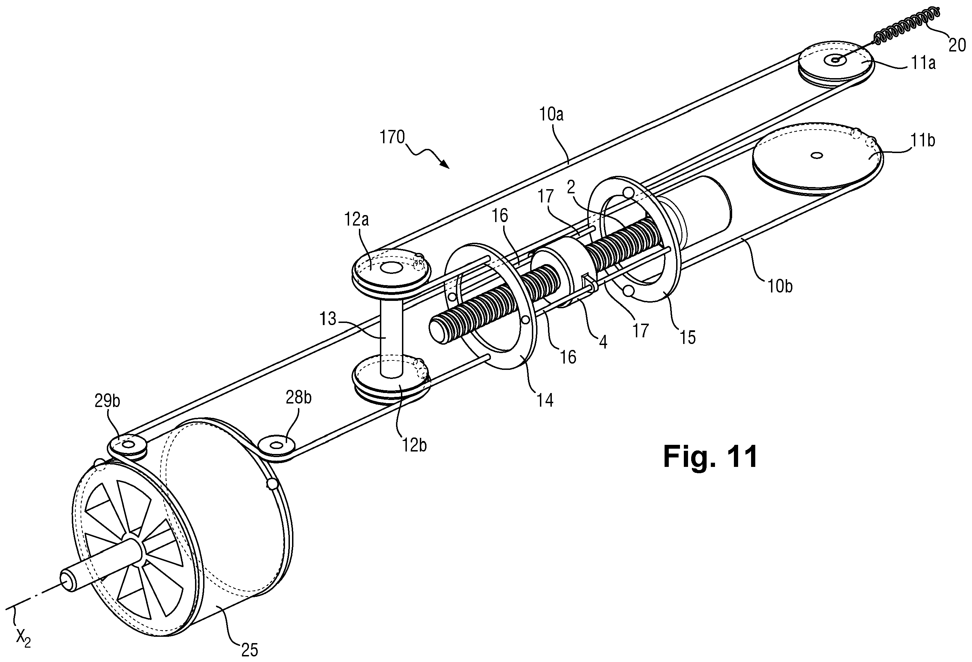

Selon maintenant le troisième mode particulier de réalisation, illustré à la figure 11, dans lequel le vérin à câbles 170 est également utilisé pour faire tourner une poulie distante 25 autour d'un axe de rotation X2 parallèle à l'axe de rotation X1 de la vis 2, la poulie amont 11b a été un peu agrandie par rapport à la poulie amont 11a de sorte qu'il n'est plus nécessaire de renvoyer le câble long 10b vers l'avant au moyen d'une poulie auxiliaire de renvoi (comme la poulie 26b des figures 8 à 10). Le câble long 10b fait toujours un tour mort autour de la poulie aval 12b. Ici, pour engager les deux brins du câble long 10b sur la poulie distante 25, on utilise deux poulies de renvoi 28b, 29b qui s'étendent à proximité immédiate de la poulie 25 entraînée.

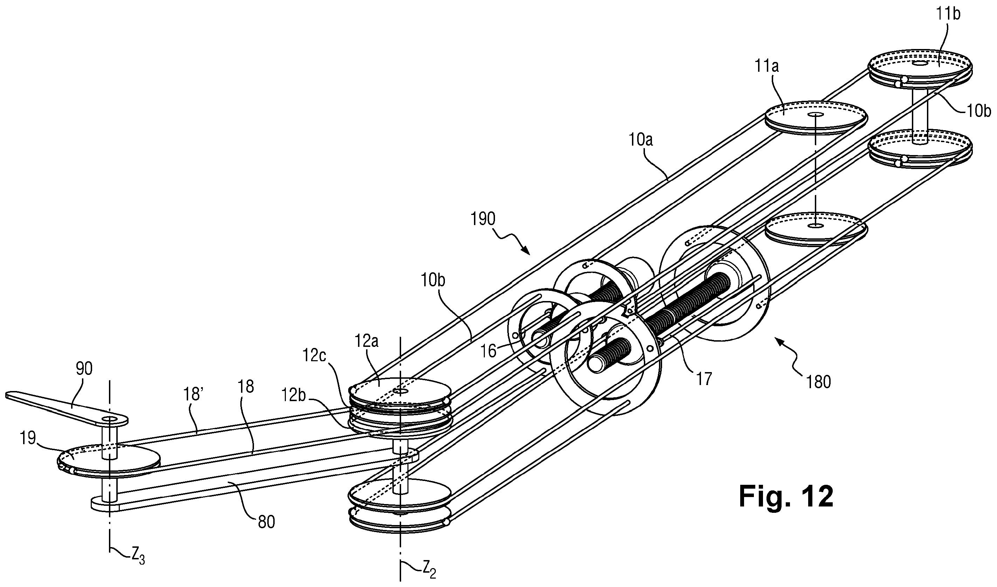

Le vérin à câbles selon l'invention se prête à diverses applications. L'une d'elles consiste à actionner des phalanges d'un doigt d'une main robotisée. Comme cela est visible sur la figure 12, on utilise ici un premier vérin à câbles 180 connu en soi (donc avec deux câbles de longueur identiques) pour actionner une première phalange 80 et un deuxième vérin à câbles 190 selon l'invention (donc à câbles de longueurs distinctes) pour actionner une deuxième phalange 90.

Plus précisément, la première phalange 80 a une extrémité proximale montée pivotante autour d'un axe Z2 et solidaire en rotation de l'une des poulies aval du premier vérin à câbles 180. L'actionnement du premier vérin à câble 180 provoque donc la rotation de cette poulie aval, et donc le pivotement de la première phalange 80.

La deuxième phalange 90 est montée à rotation autour d'un axe Z3 parallèle à l'axe Z2 à l'extrémité distale de la première phalange 80, pour former un doigt à deux phalanges. Le deuxième vérin à câbles 190, conforme à l'invention, comporte un câble long 10b qui a été prolongé par un brin 18 au-delà de sa poulie aval 12b autour de laquelle il fait un tour mort pour aller entraîner une poulie distante 19 qui est montée à rotation selon l'axe de rotation Z3, en étant solidaire en rotation de la deuxième phalange 90. On remarquera que le brin 18' qui revient de la poulie distante 19 fait lui-même un tour mort autour d'une poulie auxiliaire 12c montée folle selon l'axe de rotation Z2 de la première phalange 80 et servant ainsi de guidage du câble long 10b lors des pivotements de la première phalange 80. Ici, les poulies aval 12a, 12b, et la poulie auxiliaire 12c sont montées à rotation selon l'axe Z2 de rotation de la première phalange 80.

Ainsi, le vérin à câbles asymétriques 190 selon l'invention est ici utilisé pour entraîner une poulie distante 19 dont l'axe de rotation Z3 n'est pas fixe mais mobile.

On remarquera que le premier vérin 180 et le deuxième vérin 190 selon l'invention sont regroupés ce qui facilite leur disposition dans une main ou un bras robotique.

On peut bien entendu continuer le processus et ajouter un troisième vérin, choisi asymétrique selon l'invention, pour actionner une troisième phalange montée à pivotement autour d'un axe à l'extrémité distale de la deuxième phalange, et ainsi de suite. Le câble long de ce troisième vérin fera alors avantageusement des tours morts autour de poulies auxiliaires montées folles selon les axes de rotation Z2 et Z3.

L'invention n'est pas limitée à ce qui vient d'être décrit, mais englobe au contraire toute variante entrant dans le cadre défini par les revendications.

En particulier, bien que les vérins à câbles de l'invention illustrés aux figures 4 à 12 comportent tous des anneaux de couplage 14, 15 pour atteler indirectement les câbles 10a,10b à l'écrou 4 via les tirants 16, 17, on pourra se passer de ces anneaux et atteler directement les câbles 10a, 10b à l'écrou 4.

## Revendications

1. Vérin à câbles comportant un corps dans lequel une vis (2) est montée à rotation autour d'un axe longitudinal (X1) en étant sélectivement entraînée par un moteur (3), un écrou (4) coopérant avec la vis pour se déplacer dans le corps sous l'effet de la rotation de la vis, le vérin comportant deux câbles (10a, 10b) coopérant avec des poulies amont (11a, 11b) et des poulies aval (12a, 12b) respectives disposées de part et d'autre de l'écrou de façon à définir pour chaque câble des brins parallèles à l'axe de rotation de la vis qui sont attelés à l'écrou, les poulies amont ou les poulies aval étant solidarisées en rotation par un arbre de synchronisation, l'un des câbles (10a) formant une boucle entre sa poulie amont (11a) et sa poulie aval (12a), **caractérisé en ce que** l'autre des câbles (10b) est prolongé au-delà de sa poulie aval (12b) pour coopérer avec une poulie distante (19;25) montée à rotation selon un axe de rotation distant distinct de l'axe de rotation de la poulie aval, la poulie distante formant renvoi pour renvoyer le câble prolongé vers la poulie amont, le câble prolongé (10b) étant empêché de glisser sur sa poulie aval.

2. Vérin à câbles selon la revendication 1, dans lequel le câble prolongé (10b) est empêché de glisser en faisant au moins un tour mort autour de celle de sa poulie amont ou aval solidarisée en rotation.

3. Vérin à câbles selon la revendication 1, dans lequel les câbles (10a, 10b) sont attelés à l'écrou (4) par l'intermédiaire d'anneaux de couplage (14, 15) eux-mêmes attelés à l'écrou par des tirants (16, 17).

4. Vérin à câbles selon la revendication 1, dans lequel les poulies amont (11a, 11b) sont solidarisées en rotation au moyen d'un arbre de synchronisation (13).

5. Vérin à câbles selon la revendication 1, dans lequel les poulies aval (12a, 12b) sont solidarisées en rotation au moyen d'un arbre de synchronisation (13).

6. Vérin selon la revendication 1, dans lequel au moins un des câbles (10a, 10b) est équipé d'un ridoir (21).

7. Vérin selon la revendication 1, équipé d'un moins un tendeur (20 ; 20a, 20b) pour tirer sur l'une des poulies amont ou aval de l'un des câbles.

8. Vérin à câbles selon la revendication 1, dans lequel la poulie distante (19) est montée à rotation selon un axe de rotation (Z3) parallèle aux axes de rotation (Z1, Z2) des poulies amont et aval.

9. Vérin à câbles selon la revendication 1, dans lequel la poulie distante (25) est montée à rotation selon un axe de rotation (X2) parallèle à un axe de rotation (X1) de la vis.

10. Vérin à câbles selon la revendication 9, dans lequel deux poulies de renvoi (26b, 27b ; 28b, 29b) renvoient le câble prolongé (10b) pour l'engager sur la poulie distante (25).

11. Vérin à câbles selon la revendication 1, dans lequel le brin du câble prolongé (10b) revenant de la poulie distante (25, 19) vers sa poulie amont (11a) est guidé par une poulie auxiliaire (12c) montée folle.

12. Vérin à câbles selon la revendication 11, dans lequel le câble prolongé (10b) fait un tour mort autour de la poulie auxiliaire (12c).

13. Vérin à câbles selon la revendication 11, dans lequel la poulie auxiliaire (12c) est montée folle à rotation selon le même axe de rotation que la poulie aval (12b) du câble prolongé (10b).

## Patentansprüche

1. Kabelzylinder mit einem Körper, in welchem eine Spindel (2) um eine Längsachse (X1) herum drehbar angebracht ist und der wahlweise von einem Motor (3) angetrieben wird, wobei eine Mutter (4) derart mit der Spindel zusammenwirkt, dass sie sich infolge der Drehung der Spindel in dem Körper verschiebt, wobei der Zylinder zwei Kabel (10a, 10b) enthält, die mit vorgeordneten Rollen (11a, 11b) und nachgeordneten Rollen (12a, 12b) zusammenwirken, welche jeweils derart zu beiden Seiten der Mutter angeordnet sind, dass sie für jedes Kabel parallel zu der Drehachse der Spindel angeordnete Stränge definieren, die an der Mutter gekoppelt sind, wobei die vorgeordneten Rollen bzw. die nachgeordneten Rollen durch eine Synchronisierungswelle drehfest miteinander verbunden sind, wobei eines der Kabel (10a) zwischen seiner vorgeordneten Rolle (11a) und seiner nachgeordneten Rolle (12a) eine Schleife bildet, **dadurch gekennzeichnet, dass** das andere der Kabel (10b) derart über seine nachgeordnete Rolle (12b) hinaus verlängert ist, dass es mit einer abgesetzten Rolle (19; 25) zusammenwirkt, welche drehbar um eine abgesetzte Drehachse angebracht ist, die sich von der Drehachse der nachgeordneten Rolle unterscheidet, wobei die abgesetzte Rolle eine Umlenkrolle bildet, welche das verlängerte Kabel zu der vorgeordneten Rolle hin umlenkt, wobei das verlängerte Kabel (10b) verrutschsicher über seine nachgeordnete Rolle geführt wird.

2. Kabelzylinder nach Anspruch 1, wobei das verlängerte Kabel (10b) zumindest einmal um die mit ihm drehfest angebrachte vorgeordnete oder nachgeordnete Rolle herumgeschlagen ist und so am Verrutschen gehindert wird.

3. Kabelzylinder nach Anspruch 1, wobei die Kabel (10a, 10b) über Kupplungsringe (14, 15) an der Mutter (4) gekoppelt sind, welche ihrerseits über Zugstangen (16, 17) an besagter Mutter gekoppelt sind.

4. Kabelzylinder nach Anspruch 1, wobei die vorgeordneten Rollen (11a, 11b) mittels einer Synchronisierungswelle (13) drehfest miteinander verbunden sind.

5. Kabelzylinder nach Anspruch 1, wobei die nachgeordneten Rollen (12a, 12b) mittels einer Synchronisierungswelle (13) drehfest miteinander verbunden sind.

6. Kabelzylinder nach Anspruch 1, wobei zumindest eines der Kabel (10a, 10b) mit einem Anziehelement (21) ausgestattet ist.

7. Kabelzylinder nach Anspruch 1, ausgestattet mit zumindest einem Spannelement (20; 20a, 20b), mit welchem an der vorgeordneten bzw. an der nachgeordneten Rolle gezogen wird.

8. Kabelzylinder nach Anspruch 1, wobei die abgesetzte Rolle (19) um eine Drehachse (Z3) drehbar angebracht ist, die parallel zu den Drehachsen (Z1, Z2) der vorgeordneten und der nachgeordneten Rolle verläuft.

9. Kabelzylinder nach Anspruch 1, wobei die abgesetzte Rolle (25) um eine Drehachse (X2) drehbar angebracht ist, die parallel zu einer Drehachse (X1) der Spindel verläuft.

10. Kabelzylinder nach Anspruch 9, wobei zwei Umlenkrollen (26b, 27b; 28b, 29b) das verlängerte Kabel (10b) zu der abgesetzten Rolle (25) hin umlenken.

11. Kabelzylinder nach Anspruch 1, wobei der Strang des verlängerten Kabels (10b), der von der abgesetzten Rolle (25, 19) kommend zu seiner vorgeordneten Rolle (11a) hin zurückverläuft, über eine frei drehende Hilfsrolle (12c) geführt ist.

12. Kabelzylinder nach Anspruch 11, wobei das verlängerte Kabel (10b) einmal um die Hilfsrolle (12c) herumgeschlagen ist.

13. Kabelzylinder nach Anspruch 11, wobei die Hilfsrolle (12c) frei drehend um dieselbe Drehachse angebracht ist wie die nachgeordnete Rolle (12b) des verlängerten Kabels (10b).

## Claims

1. Cable cylinder comprising a body, in which a screw (2) is rotatably mounted so as to rotate about a longitudinal axis (X1) by being selectively driven by a motor (3), a nut (4) cooperating with the screw so as to move in the body due to the rotational movement of the screw, the cylinder comprising a pair of upstream pulleys (11a, 11b) and a pair of downstream pulleys (12a, 12b) arranged on either side of the nut, such that in at least one of the pairs, the pulleys are rotationally secured to one another, and two cables (10a, 10b) each cooperating with one of the upstream pulleys and one of the downstream pulleys so as to define, for each cable, strands that are parallel to the axis of rotation of the screw, which are attached to the nut, one of the cables (10a) forming a loop between its upstream pulley (11a) and its downstream pulley (12a), **characterised in that** the other of the cables (10b) is extended beyond its downstream pulley (12b) to cooperate with a remote pulley (19; 25) rotatably mounted so as to rotate about a remote axis of rotation, separate from the axis of rotation of the downstream pulley, the remote pulley forming a return to return the extended cable to the upstream pulley, the extended cable (10b) being prevented from sliding over at least that of its upstream or downstream pulley that is rotationally secured.

2. Cable cylinder according to claim 1, wherein the extended cable (10b) is prevented from sliding by making at least one round turn around that of its upstream or downstream pulley that is rotationally secured.

3. Cable cylinder according to claim 1, wherein the cables (10a, 10b) are attached to the nut (4) through coupling rings (14, 15), themselves attached to the nut by tie rods (16, 17).

4. Cable cylinder according to claim 1, wherein the upstream pulleys (11a, 11b) are rotationally secured by means of a synchronisation shaft (13).

5. Cable cylinder according to claim 1, wherein the downstream pulleys (12a, 12b) are rotationally secured by means of a synchronisation shaft (13).

6. Cylinder according to claim 1, wherein at least one of the cables (10a, 10b) is equipped with a rigging screw (21).

7. Cylinder according to claim 1, equipped with at least one tensioner (20; 20a, 20b) to pull on one of the upstream or downstream pulleys of one of the cables.

8. Cable cylinder according to claim 1, wherein the remote pulley (19) is rotatably mounted so as to rotate about an axis of rotation (Z3) that is parallel to the axes of rotation (Z1, Z2) of the upstream and downstream pulleys.

9. Cable cylinder according to claim 1, wherein the remote pulley (25) is rotatably mounted so as to rotate about an axis of rotation (X2) that is parallel to an axis of rotation (X1) of the screw.

10. Cable cylinder according to claim 9, wherein two return pulleys (26b, 27b; 28b, 29b) return the extended cable (10b) to engage it on the remote pulley (25).

11. Cable cylinder according to claim 1, wherein the strand of the extended cable (10b) returning from the remote pulley (25, 19) to its upstream pulley (11a) is guided by an auxiliary pulley (12c) mounted idle.

12. Cable cylinder according to claim 11, wherein the extended cable (10b) makes a round turn around the auxiliary pulley (12c).

13. Cable cylinder according to claim 11, wherein the auxiliary pulley (12c) is mounted rotatably idle along the same axis of rotation as the downstream pulley (12b) of the extended cable (10b).
